# FASCICULE DE BREVET EUROPEEN

(11) **EP 2 773 475 B1**
(45) Date de publication et mention de la délivrance du brevet: **09.09.2015**
(21) Numéro de dépôt: 12787808.0
(22) Date de dépôt: 23.10.2012
(51) Int. Cl.: B22F 3/00, B22F 3/105, B29C 67/00

(54) **INSTALLATION DE FABRICATION DE PIÈCES PAR FUSION SÉLECTIVE DE POUDRE**
VORRICHTUNG ZUR HERSTELLUNG VON BAUTEILEN DURCH SELEKTIVES SCHMELZEN VON PULVER
APPARATUS FOR MANUFACTURING PARTS BY SELECTIVE MELTING OF POWDER

(30) Priorité: 03.11.2011 FR 1159958
(43) Date de publication de la demande: 10.09.2014
(73) Titulaire: SNECMA, 75015 Paris (FR)
(72) Inventeur: RIX, Sébastien, F-77550 Moissy Cramayel Cedex (FR); VILARO, Thomas, F-77550 Moissy Cramayel Cedex (FR)
(74) Mandataire: Pichat, Thierry
(86) Numéro de dépôt international: PCT/FR2012/052426
(87) Numéro de publication internationale: WO 2013/064767

(56) Documents cités:
- EP-A1- 2 377 670
- US-A1- 2010 047 470

## Description

La présente invention concerne une installation de fabrication de pièces par fusion sélective de poudre, à l'aide d'un faisceau laser ou d'un faisceau d'électrons.

Une telle installation permet la fabrication de pièces à l'aide d'un procédé connu sous les noms de Direct Metal Laser Sintering ou Electron Beam Melting.

Ce procédé consiste à fabriquer une pièce par fusion de couches successives de poudre au moyen d'un faisceau laser ou d'un faisceau d'électrons commandé par un système de traitement de l'information dans lequel on a enregistré les coordonnées tridimensionnelles des points des couches successives à réaliser. De façon pratique, on dispose sur le fond d'une cuve formé par un plateau mobile en translation verticale, une première couche de poudre à l'aide d'un racleur. La couche présente alors une surface inférieure correspondant à la surface supérieure du plateau et une surface supérieure sur laquelle est dirigé et déplacé le faisceau laser ou le faisceau d'électrons. L'énergie apportée par ce faisceau provoque la fusion locale de la poudre qui, en se solidifiant, forme une première couche de la pièce métallique.

Après formation de cette première couche, le plateau est descendu d'une distance correspondant à l'épaisseur d'une couche, puis une seconde couche de poudre est amenée par le racleur sur la couche précédente. De la même manière que précédemment, une seconde couche de la pièce métallique est formée par fusion à l'aide du faisceau laser ou du faisceau d'électrons.

Ces opérations sont répétées jusqu'à fabrication complète de la pièce.

Le plateau mobile est généralement fixé par des vis à un support mobile, déplacé en translation verticale dans la cuve par actionnement d'un vérin.

La planéité de la surface supérieure du plateau mobile doit être garantie tout au long de la fabrication de la pièce. Or, les passages successifs du faisceau laser ou du faisceau d'électrons génèrent des contraintes thermiques dans le plateau mobile, qui peuvent aboutir à sa déformation si celui-ci n'est pas suffisamment rigide.

Afin d'avoir une rigidité suffisante, le plateau mobile présente une épaisseur importante, par exemple de l'ordre de 60 mm pour un plateau en INCONEL 718.

Le coût d'un tel plateau est très élevé, l'ensemble plateau mobile-pièce étant par ailleurs très lourd, ce qui rend son transport délicat.

Enfin le plateau mobile a une très forte inertie thermique et requiert donc de longs paliers de chauffe lors des traitements thermiques appliqués en cours de fabrication ou à l'issue de la fabrication, tels par exemple que des traitements thermiques de détensionnement ou de libération des contraintes.

L'invention a notamment pour but d'apporter une solution simple, efficace et économique à ce problème.

A cet effet, elle propose une installation de fabrication de pièces par fusion sélective de poudre, comportant une cuve dont le fond est constitué par un plateau mobile, des moyens d'amenée de poudre dans la cuve, et des moyens de génération et de déplacement d'un faisceau laser ou d'un faisceau d'électrons conçu pour provoquer la fusion sélective de la poudre dans la cuve, caractérisée en ce qu'elle comprend des moyens de mise sous tension du plateau mobile dans au moins une direction parallèle au plan dudit plateau.

La mise sous tension du plateau mobile permet de garantir efficacement sa planéité, même lorsque celui-ci présente une faible épaisseur.

L'épaisseur, et donc le poids et l'inertie thermique du plateau mobile, peuvent ainsi être réduits.

Avantageusement, les moyens de mise sous tension sont conçus pour soumettre le plateau mobile à des efforts de tension orientés suivant deux directions perpendiculaires.

Dans un mode de réalisation préféré de l'invention, les moyens de mise sous tension comportent au moins un vérin appliquant un effort au niveau d'au moins un bord du plateau mobile.

Le plateau mobile peut également comporter au moins un rebord d'appui des moyens de mise sous tension.

Selon une caractéristique de l'invention, une cale est montée entre le rebord du plateau mobile et les moyens de mise sous tension.

La cale permet notamment de répartir les efforts le long du rebord.

Le plateau mobile a par exemple une épaisseur comprise entre 3 et 10 mm.

De préférence, les moyens de mise sous tension sont montés sur un support mobile, sous le plateau mobile.

Selon une forme de réalisation de l'invention, le plateau mobile présente une forme rectangulaire ou carrée, et comporte, au niveau de chacun de ses bords, un rebord s'étendant vers le bas, chaque rebord étant soumis à un effort généré par les moyens de mise sous tension.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est vue schématique d'une installation de fabrication de pièces par fusion sélective de poudre, selon l'art antérieur,
- la figure 2 est une vue de détail illustrant le montage du plateau mobile sur le support mobile, selon l'art antérieur,
- la figure 3 est une vue éclatée représentant schématiquement le montage du plateau mobile sur le support mobile, selon l'invention,
- la figure 4 est une vue en coupe, illustrant le montage du plateau mobile sur le support mobile, selon l'invention.

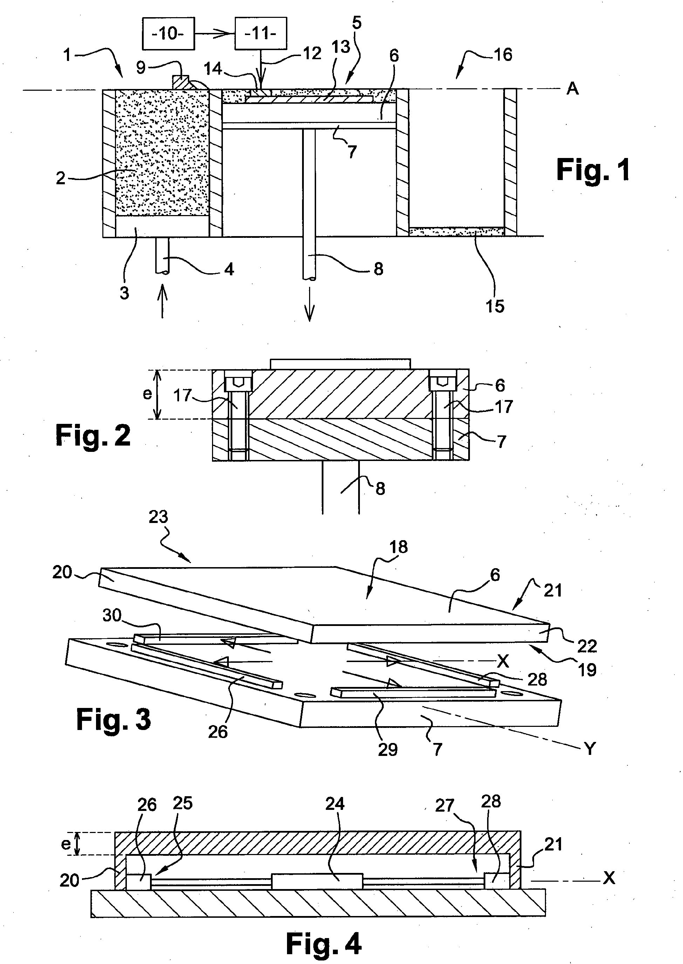

Une installation connue de fabrication d'une pièce métallique par fusion sélective d'une poudre est représentée à la figure 1. Elle comporte un réservoir 1 contenant une poudre métallique 2 et dont le fond 3 est mobile et déplaçable en translation verticale par une tige 4 d'un vérin, et une cuve voisine 5 dont le fond est constitué par un plateau mobile 6, fixé sur un support mobile 7, également déplaçable en translation verticale par une tige 8 d'un vérin.

L'installation comporte en outre un racleur 9 permettant d'amener de la poudre du réservoir 1 vers la cuve 5, par déplacement le long d'un plan horizontal A, et des moyens 10 de génération d'un faisceau laser ou d'un faisceau d'électrons, couplés à un dispositif 11 permettant d'orienter et de déplacer le faisceau 12.

Les étapes de fabrication d'une pièce métallique à l'aide de cette installation sont les suivantes.

Tout d'abord, le fond 3 du réservoir 1 est déplacé vers le haut de manière à ce qu'une certaine quantité de poudre 2 soit située au-dessus du plan horizontal A. Le racleur 9 est alors déplacé de la gauche vers la droite, de manière à racler ladite couche de poudre 2 issue du réservoir 1 et l'amener dans la cuve 5. La quantité de poudre 2 et la position du plateau 6 sont déterminées de façon à former une couche de poudre d'une épaisseur choisie et constante, l'excédent 15 étant évacué dans une cuve 16.

Un faisceau laser ou un faisceau d'électrons 12 balaye ensuite une zone déterminée de la couche formée dans la cuve 5, de manière à fondre localement la poudre 2, dans la zone balayée. Les zones fondues se solidifient de manière à former une première couche 13 de la pièce à fabriquer, cette couche 13 ayant par exemple une épaisseur de 10 à 100 µm.

Le plateau 6 est alors descendu puis une seconde couche de poudre 2 est amenée, de la même manière que précédemment, sur la première couche de poudre. Par déplacement contrôlé du faisceau 12, une seconde couche 14 de la pièce métallique est formée par fusion de la poudre sur la première couche 13.

Ces opérations sont répétées jusqu'à la réalisation complète de la pièce.

Comme cela est illustré à la figure 2, dans l'installation de l'art antérieur, le plateau mobile 6 est fixé sur le support mobile 7, par l'intermédiaire de vis 17.

Afin d'éviter la déformation du plateau mobile 6 lors de la fabrication des pièces, l'épaisseur e dudit plateau 6 est relativement importante, de l'ordre de 60 mm par exemple. Comme expliqué ci-dessus, un tel plateau est relativement couteux et lourd et présente une inertie thermique importante.

Afin de pallier ces inconvénients, l'invention propose d'équiper le plateau mobile 6 de moyens de mise sous tension. Le plateau 6 n'est alors plus fixé par des vis au support mobile 7.

Plus particulièrement, le plateau mobile 6 présente une forme rectangulaire ou carrée, une face supérieure 18, tournée vers la cuve, et une face inférieure 19, tournée vers le support mobile 7.

La face inférieure 19 comporte des rebords 20, 21, 22, 23 s'étendant vers le bas depuis les bords périphériques du plateau mobile 6, en direction du support mobile 7.

Les moyens de mise sous tension comportent un premier vérin hydraulique 24 orienté suivant un axe X, dans un plan horizontal. Une première extrémité 25 du premier vérin prend appui sur le rebord 20, par l'intermédiaire d'une cale 26 s'étendant sur toute la longueur du rebord 20, une seconde extrémité 27 du premier vérin 24 prenant appui sur le rebord 21, situé en regard du rebord 20, par l'intermédiaire d'une cale 28 s'étendant sur toute la longueur du rebord 21.

Les moyens de mise sous tension comportent en outre un second vérin hydraulique orienté dans un plan horizontal suivant un axe Y, perpendiculaire à l'axe X. Une première extrémité du second vérin prend appui sur le rebord 22, par l'intermédiaire d'une cale 29 s'étendant sur toute la longueur du rebord 22, une seconde extrémité du second vérin prenant appui sur le rebord 23, situé en regard du rebord 22, par l'intermédiaire d'une cale 30 s'étendant sur toute la longueur du rebord 23.

Dans l'exemple de réalisation représenté, les axes X, Y de mise sous tension du plateau mobile sont parallèles aux bords de ce plateau.

Par actionnement des vérins, le plateau mobile est mis sous tension dans le plan horizontal (comme représenté schématiquement par les flèches à la figure 3), ce qui permet de garantir sa planéité lors de la fabrication des pièces par fusion laser sélective de poudre, tout en réduisant son épaisseur.

A titre d'exemple, le plateau mobile 6 est réalisé en INCONEL 718 et a une épaisseur e comprise 3 et 10 mm. Les dimensions du plateau 6 suivant l'axe x et l'axe y sont respectivement de 250 mm et 250 mm.

Les efforts exercés par le premier vérin 24 sont compris entre 100 et 1000 N et les efforts exercés par le second vérin sont compris entre 100 et 1000 N.

L'épaisseur du plateau mobile 6 et les efforts appliqués par les vérins sont déterminés plus précisément par le calcul de résistance des matériaux, notamment à l'aide de la loi de Kirchhof-Love.

Bien entendu, on peut utiliser tout type de moyens de mise sous tension du plateau mobile, et par exemple des vérins à vis à la place des vérins hydrauliques.

## Revendications

1. Installation de fabrication de pièces par fusion sélective de poudre, comportant une cuve (5) dont le fond est constitué par un plateau mobile (6), des moyens (1, 3, 9) d'amenée de poudre (2) dans la cuve (5), et des moyens (10, 11) de génération et de déplacement d'un faisceau laser (12) ou d'un faisceau d'électrons conçu pour provoquer la fusion sélective de la poudre dans la cuve (5), **caractérisée en ce qu'**elle comprend des moyens (24) de mise sous tension du plateau mobile (6) dans au moins une direction (X, Y) parallèle au plan du plateau (6).

2. Installation selon la revendication 1, **caractérisée en ce que** les moyens de mise sous tension sont conçus pour soumettre le plateau mobile (6) à des efforts de tension orientés suivant deux directions perpendiculaires (X, Y).

3. Installation selon la revendication 1 ou 2, **caractérisée en ce que** les efforts de tension sont parallèles à deux côtés du plateau mobile.

4. Installation selon la revendication 1, 2 ou 3, **caractérisée en ce que** les moyens de mise sous tension comportent au moins un vérin (24) appliquant un effort au niveau d'au moins un bord (20, 21) du plateau mobile (6).

5. Installation selon l'une des revendications 1 à 4, **caractérisée en ce que** le plateau mobile comporte au moins un rebord (20, 21, 22, 23) d'appui des moyens de mise sous tension.

6. Installation selon la revendication 5, **caractérisée en ce qu'**une cale (26, 28, 29, 30) de répartition d'efforts est montée entre le rebord (20, 21, 22, 23) du plateau mobile (6) et les moyens de mise sous tension (24).

7. Installation selon l'une des revendications 1 à 6, **caractérisée en ce que** le plateau mobile (6) a une épaisseur (e) comprise entre 3 et 10 mm.

8. Installation selon l'une des revendications 1 à 7, **caractérisée en ce que** les moyens de mise sous tension sont montés sur un support mobile (7), sous le plateau mobile (6).

9. Installation selon l'une des revendications 5 à 8, **caractérisée en ce que** le plateau mobile (6) a une forme rectangulaire ou carrée, et comporte, au niveau de chacun de ses bords, un rebord (20, 21, 22, 23) s'étendant vers le bas à l'opposé de la cuve (5), chaque rebord (20, 21, 22, 23) étant soumis à un effort généré par les moyens de mise sous tension.

## Patentansprüche

1. Vorrichtung zur Herstellung von Bauteilen durch selektives Schmelzen von Pulver, enthaltend eine Wanne (5), deren Boden aus einer beweglichen Platte (6) besteht, Mittel (1, 3, 9) zum Zuführen von Pulver (2) in die Wanne (5) und Mittel (10, 11) zum Erzeugen und Verlagern eines Laserstrahls (12) bzw. eines Elektronenstrahls, der dazu ausgelegt ist, das selektive Schmelzen des Pulvers in der Wanne (5) hervorzurufen, **dadurch gekennzeichnet, dass** sie Mittel (24) zum Aufbringen einer Spannung auf die bewegliche Platte (6) in zumindest einer Richtung (X, Y) parallel zur Ebene der Platte (6) aufweist.

2. Vorrichtung nach Anspruch 1, **dadurch gekennzeichnet, dass** die Mittel zum Aufbringen einer Spannung dazu ausgelegt sind, die bewegliche Platte (6) Spannkräften auszusetzen, die in zwei senkrechten Richtungen (X, Y) ausgerichtet sind.

3. Vorrichtung nach Anspruch 1 oder 2, **dadurch gekennzeichnet, dass** die Spannkräfte zu zwei Seiten der beweglichen Platte parallel verlaufen.

4. Vorrichtung nach Anspruch 1, 2 oder 3, **dadurch gekennzeichnet, dass** die Mittel zum Aufbringen einer Spannung zumindest einen Kraftzylinder (24) aufweisen, der eine Kraft im Bereich zumindest eines Randes (20, 21) der beweglichen Platte (6) aufbringt.

5. Vorrichtung nach einem der Ansprüche 1 bis 4, **dadurch gekennzeichnet, dass** die bewegliche Platte zumindest eine Randkante (20, 21, 22, 23) zum Abstützen der Mittel zum Aufbringen einer Spannung aufweist.

6. Vorrichtung nach Anspruch 5, **dadurch gekennzeichnet, dass** ein Keil (26, 28, 29, 30) zum Verteilen der Kräfte zwischen der Randkante (20, 21, 22, 23) der beweglichen Platte (6) und den Mitteln zum Aufbringen einer Spannung (24) angebracht ist.

7. Vorrichtung nach einem der Ansprüche 1 bis 6, **dadurch gekennzeichnet, dass** die bewegliche Platte (6) eine Dicke (e) zwischen 3 und 10 mm hat.

8. Vorrichtung nach einem der Ansprüche 1 bis 7, **dadurch gekennzeichnet, dass** die Mittel zum Aufbringen einer Spannung an einem beweglichen Träger (7) unter der beweglichen Platte (6) angebracht sind.

9. Vorrichtung nach einem der Ansprüche 5 bis 8, **dadurch gekennzeichnet, dass** die bewegliche Platte (6) eine rechteckige oder quadratische Form hat und im Bereich eines jeden ihrer Ränder eine Randkante (20, 21, 22, 23) aufweist, die sich der Wanne (5) entgegengesetzt nach unten erstreckt, wobei jede Randkante (20, 21, 22, 23) einer Kraft ausgesetzt wird, die von den Mitteln zum Aufbringen einer Spannung erzeugt wird.

## Claims

1. An installation for fabricating parts by selective melting of powder, the invention comprising a vessel (5) having a bottom that is constituted by a movable plate (6), means (1, 3, 9) for bringing powder (2) into the vessel (5), and means (10, 11) for generating and moving a laser beam (12) or an electron beam that is designed to give rise to selective melting of the powder in the vessel (5), the invention being **characterized in that** it includes tensioning means (24) for tensioning the movable plate (6) in at least one direction (X, Y) parallel to the plane of the plate (6).

2. An installation according to claim 1, **characterized in that** the tensioning means are designed to subject the movable plate (6) to tension forces oriented along two perpendicular directions (X, Y).

3. An installation according to claim 1 or claim 2, **characterized in that** the tension forces are parallel to two sides of the movable plate.

4. An installation according to claim 1, 2, or 3, **characterized in that** the tensioning means comprise at least one actuator (24) applying a force via at least one edge (20, 21) of the movable plate (6).

5. An installation according to any one of claims 1 to 4, **characterized in that** the movable plate includes at least one rim (20, 21, 22, 23) against which the tensioning means bear.

6. An installation according to claim 5, **characterized in that** a force-spreader spacer (26, 28, 29, 30) is mounted between the rim (20, 21, 22, 23) of the movable plate (6) and the tensioning means (24).

7. An installation according to any one of claims 1 to 6, **characterized in that** the movable plate (6) has thickness (e) lying in the range 3 mm to 10 mm.

8. An installation according to any one of claims 1 to 7, **characterized in that** the tensioning means are mounted on the movable support (7) under the movable plate (6).

9. An installation according to any one of claims 5 to 8, **characterized in that** the movable plate (6) is of a shape that is rectangular or square, and includes at each of its edges a rim (20, 21, 22, 23) extending downwards away from the vessel (5), each rim (20, 21, 22, 23) being subjected to a force generated by the tensioning means.
